# FASCICULE DE BREVET EUROPEEN

(11) **EP 0 457 693 B1**
(45) Date de publication et mention de la délivrance du brevet: **02.03.1994**
(21) Numéro de dépôt: 91420133.0
(22) Date de dépôt: 23.04.1991
(51) Int. Cl.: C08G 77/18, C08G 77/08

(54) **Procédé de préparation de diorganopolysiloxanes à groupements terminaux alcoxy**
Verfahren zur Herstellung von Alkoxyendgruppen enthaltende Polydiorganosiloxanen
Process for preparing polydiorganopolysiloxanes having terminal alkoxy groups

(30) Priorité: 02.05.1990 FR 9005756
(43) Date de publication de la demande: 21.11.1991
(73) Titulaire: RHONE-POULENC CHIMIE, 92408 Courbevoie Cédex (FR)
(72) Inventeur: Cocco, Roger, F-69360 Saint-Symphorien D'Ozon (FR)
(74) Mandataire: Trolliet, Maurice

(56) Documents cités:
- EP-A- 0 210 402
- EP-A- 0 304 701
- EP-A- 0 367 696
- BE-A- 533 700
- FR-A- 1 495 011
- US-A- 2 634 252
- CHEMICAL ABSTRACTS, vol. 90, no. 6, février 1979, page 27, résumé no. 39644w, Columbus, Ohio, US; & JP-A-78 118 500

## Description

La présente invention concerne un procédé de préparation de diorganopolysiloxanes à groupements terminaux alcoxy, dénommés ci-dessous PF (polymères fonctionnalisés) et l'utilisation, d'au moins certains d'entre eux, notamment comme l'un des constituants essentiels de compositions élastomères organopolysiloxanes mono composantes, stables au stockage en absence d'humidité et réticulant à l'humidité atmosphérique à température ambiante, dénommées par la suite compositions pour élastomères vulcanisables à froid (EVF).

Il est connu de préparer ces PF en faisant réagir un di, un tri ou un tétra alcoxysilane sur une huile diorganopolysiloxane comprenant un groupement hydroxy lié à l'atome de silicium à chaque extrémité de sa chaîne, mais il est nécessaire d'utiliser un catalyseur. De nombreux brevets ont été déposés revendiquant l'utilisation de catalyseurs spécifiques pour cette réaction de fonctionnalisation.

Le brevet US 3 542 901 propose comme catalyseur une amine. Ce catalyseur est efficace mais la réaction est assez lente (par exemple 15 à 30 mn à 60° C pour les alcoxysilanes assez réactifs tels que Si(OCH₃)₄ ou Vi Si (OCH₃)₃). Avec des alcoxysilanes peu réactifs, on doit avoir recours à des temps beaucoup plus longs ou bien n'obtenir que des réactions incomplètes. Or, il est connu que la présence de silanols résiduels est généralement néfaste pour la stabilité (voir US 4 489 191-A ainsi que les demandes de brevets français n° 2 597 876 et 2 597 877). De plus, il est difficile d'éliminer complètement l'amine qui peut avoir un effet néfaste sur la stabilité au stockage de la composition ; elle peut provoquer également l'apparition de colorations jaunâtres soit au cours de la conservation du mastic soit sur le produit réticulé.

C'est pourquoi de nombreux autres systèmes catalytiques ont été proposés. On peut citer :
- acétate de potassium : US 3,504,051
- oxydes minéraux divers : FR 1 495 011
- dérivés organiques du titane : US-A-4 111 890
- titanate plus amine : US 3,647,846
- chelate d'alcoxy aluminium : GB-A-2 144 758
- hydroxylamine N-N' disubstituée : FR-A-2 508 467
- acide carboxylique plus amine : FR 2 604 713 et EP-A-304 701
- carbamates : EP 0 210 402
- composés organiques ayant une fonction oxime : FR 2 597 875.

Certains de ces catalyseurs sont un peu plus actifs que les amines mais il est néanmoins nécessaire de chauffer à 60-70° C pour obtenir des temps de fonctionnalisation de 5 à 10 minutes. En outre, ces catalyseurs, ou leurs résidus, peuvent avoir une influence néfaste sur la stabilité au stockage notamment en présence des catalyseurs de prise ainsi que sur les propriétés des réticulats car il est difficile ou impossible de les éliminer totalement après réaction.

La demande de brevet FR 88.15312 déposée le 4 novembre 1988 au nom de la Demanderesse décrit également un procédé de préparation de diorganopolysiloxanes à groupements terminaux alcoxy en utilisant, comme catalyseur de fonctionnalisation, la lithine.

Un autre procédé pour faire des huiles fonctionnalisées (PF) consiste à utiliser des silanes mixtes présentant en plus des groupements alcoxy, un groupe hydrolysable tel qu'un groupe amido, amino, carbamate, oxime, etc..., éventuellement en présence d'un catalyseur de fonctionnalisation connu et d'un polyalcoxysilane.

Des procédés de ce type sont décrits notamment dans les brevets US-A-3 697 568, US-A-3 896 079 et EP-A-69 256.

Ces procédés sont efficaces mais nécessitent l'utilisation de silanes mixtes coûteux. Par ailleurs les produits organiques issus des groupes hydrolysables après réaction peuvent avoir un effet néfaste sur la composition EVF (voir à ce sujet les pages 4 et 5 du brevet français FR-A-2 543 562).

Il est également connu de préparer des résines silicones à partir d'huiles diorganopolysiloxanes en présence de KOH (US-A-2 634 252).

La présente invention a pour but de proposer des catalyseurs de fonctionnalisation très efficaces pour l'obtention de diorganopolysiloxanes linéaires comprenant au moins un groupement alcoxy lié à un atome de silicium à chaque extrémité de leur chaîne (polymères appelés PF ci-après ou huiles fonctionnalisées).

Un autre but de la présente invention est de proposer des catalyseurs de fonctionnalisation qui permettent l'obtention de PF en opérant à la température ambiante, notamment en utilisant du CH₃Si(OCH₃)₃, du CH₂=CH-Si (OCH₃)₃ ou du MeViSi(OCH₃)₂ comme agent de fonctionnalisation (Me représentant le groupement méthyle - CH₃ et Vi représentant le groupement vinyle -CH=CH₂).

Un autre but de la présente invention est de proposer des catalyseurs de fonctionnalisation qui permettent d'obtenir des PF, à température ambiante, en un temps inférieur à 15 minutes, avantageusement inférieur à 10 minutes, de préférence égal ou inférieur à 5 minutes, notamment en utilisant comme agent de réticulation un de ceux mentionnés ci-dessus.

Un autre but de la présente invention est l'utilisation de catalyseurs bons marchés, disponibles dans le commerce (de la chimie) et pouvant être utilisés, même en grande quantité, pendant la réaction de fonctionnalisation.

Un autre but de la présente invention est de proposer des catalyseurs de fonctionnalisation pouvant être aisément neutralisés à la fin de la réaction de fonctionnalisation, notamment par un silylphosphate.

Un autre but de la présente invention est de proposer des catalyseurs de fonctionnalisation qui en fin de réaction de fonctionnalisation peuvent être neutralisés sans avoir à se presser pour effectuer cette neutralisation, c'est-à-dire que l'on peut commencer la neutralisation par exemple une heure après que la réaction de fonctionnalisation a été terminée.

Un autre but de la présente invention est un catalyseur de fonctionnalisation qui, après sa neutralisation et éventuellement la dévolatilisation de la masse réactionnelle en fin de réaction de fonctionnalisation, permet la préparation, avec le PF obtenu (contenant le produit de réaction de neutralisation du catalyseur), de compositions pour élastomères vulcanisables à foid (EVF) stables au stockage en absence d'humidité et réticulant à l'humidité atmosphérique à température ambiante.

De telles compositions présentent l'avantage de ne pas nécessiter l'utilisation de composés (Scavengers) destinés à éliminer les dernières traces de silanols, tels que ceux décrits dans les brevets n° EP 69 256, EP 104 179 et FR 2 543 562.

Il a donc été trouvé et c'est ce qui fait l'objet de la présente invention un procédé pour la préparation de diorganopolysiloxane linéaire comprenant au moins un groupement alcoxy lié à un atome de silicium à chaque extrémité de sa chaîne, ledit procédé étant caractérisé en ce que l'on fait réagir :
- 100 parties en poids d'au moins un diorganopolysiloxane linéaire comprenant un groupement hydroxy lié à un atome de silicium à chaque extrêmité de sa chaîne,
- 0,35 à 6 parties en poids d'au moins un polyalcoxysilane de formule :

   (R⁴)_{c} (R¹)ₐ Si(OR²)_{4-(a + c)} (1)
- 0,5 à 15 parties en poids d'au moins un alcool, de préférence le méthanol,

en présence d'une quantité catalytiquement efficace de soude de formule NaOH ou de potasse de formule KOH,
- où a est 0 ou 1, ou 2,
- où c est 0 ou 1, ou 2,
- où a + c = 0 ou 1 ou 2,
- où R¹ représente un radical monovalent hydrocarboné saturé ou non en C₁ à C₁₃, substitué ou non substitué, aliphatique, cyclanique ou aromatique, pouvant comporter une fonction époxy, amine primaire, secondaire, tertiaire, mercapto.
- où R² représente un radical organique aliphatique ayant de 1 à 8 atomes de carbone choisi notamment entre les radicaux alkyle, les radicaux alkyléther, les radicaux alkylester, les radicaux alkylcétone, les radicaux alkylcyano ou un radical aralkyle ayant de 7 à 13 atomes de carbone, étant entendu que les groupements alcoxy du silane de formule (1) peuvent avoir chacun une signification différente pour R² ou la même signification,
- où R⁴ représente un radical monovalent hydrocarboné saturé ou non en C₁ à C₁₃ substitué ou non, aliphatique, cyclanique ou aromatique, R⁴ pouvant être identique à R¹.

Selon une variante de l'invention, il a été également trouvé un procédé pour la préparation de diorganopolysiloxane linéaire comprenant au moins un groupement alcoxy lié à un atome de silicium à chaque extrémité de sa chaîne, ledit procédé étant caractérisé en ce que l'on fait réagir une mole d'au moins un diorganopolysiloxane comprenant un groupement hydroxy lié à un atome de silicium à chaque extrémité de sa chaîne, avec de 2 à 6 moles d'au moins un polyalcoxysilane de formule :

(R⁴)_{c} (R¹)ₐ Si(OR²)_{4-(a + c)} (1)

en présence d'une quantité catalytiquement efficace de soude de formule NaOH ou de potasse de formule KOH,
- où a est 0 ou 1, ou 2,
- où c est 0 ou 1, ou 2,
- où a + c = 0 ou 1 ou 2,
- où R¹ représente un radical monovalent hydrocarboné saturé ou non en C₁ à C₁₃, substitué ou non substitué, aliphatique, cyclanique ou aromatique,
- où R² représente un radical organique aliphatique ayant de 1 à 8 atomes de carbone choisi notamment entre les radicaux alkyle, les radicaux alkyléther, les radicaux alkylester, les radicaux alkylcétone, les radicaux alkylcyano ou un radical aralkyle ayant de 7 à 13 atomes de carbone, étant entendu que les groupements alcoxy du silane de formule (1) peuvent avoir chacun une signification différente pour R² ou la même signification,
- où R⁴ représente un radical monovalent hydrocarboné saturé ou non en C₁ à C₁₃ substitué ou non, aliphatique, cyclanique ou aromatique, R⁴ pouvant être identique à R¹.

Il existe ces deux variantes car il a été constaté par la Demanderesse qu'au cours de la fonctionnalisation de polydiorganopolysiloxanes par les alcoxysilanes, par catalyse alcaline forte, des réactions de dégradation des polymères fonctionnalisés obtenus apparaissent. Après une étude cinétique approfondie de ces différentes réactions mises en jeu, il a été trouvé que dans certaines conditions, ces réactions de dégradation néfastes peuvent être fortement ralenties.

Ainsi, plus que la force de la base utilisée en tant que catalyseur, c'est la quantité de polyalcoxysilanes introduits en synergie avec le catalyseur qui est un paramètre prépondérant dans le processus de dégradation des polymères fonctionnalisés. C'est pourquoi on fait réagir une mole d'un diorganopolysiloxane comprenant un groupement hydroxy lié à un atome de silicium à chaque extrémité de sa chaîne, avec de 2 à 6 moles d'au moins un polyalcoxysilane de formule (1), sachant qu'un seul des groupements alcoxy d'un polyalcoxysilane réagit avec un groupement silanol d'un diorganopolysiloxane, cela correspond à une à trois fois la stoechiométrie.

Un excès de polyalcoxysilanes augmente la vitesse des réactions de dégradation, par excès de polyalcoxysilanes, on entend une quantité de ces polyalcoxysilanes supérieure à 3 fois la stoechiométrie. Mais les réactions de dégradation peuvent être nettement ralenties lorsque au moins un alcool, tels que le méthanol, l'éthanol et le propanol seuls ou en mélange, est présent dans le mélange réactionnel et que sa quantité est comprise entre 0,5 et 15 parties en poids de préférence entre 2 et 5 parties en poids, pour 100 parties en poids d'au moins un polydiorganopolysiloxane.

D'une manière pratique on utilise un alcool dont la température d'ébullition est inférieure ou égale à 100°C.

Un autre but de la présente invention est l'utilisation de diorganopolysiloxanes linéaires, notamment ceux comprenant au moins deux groupements alcoxy à chaque extrémité de chaîne obtenus selon le procédé de la présente invention pour la préparation de compositions polysiloxane monocomposantes, stables au stockage en absence d'humidité et réticulant en élastomère en présence d'humidité.

Plus précisément les diorganosiloxanes comprenant au moins un groupement alcoxy à chaque extrémité de leur chaîne ont pour formule : 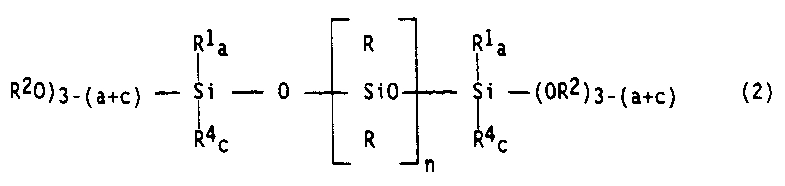
et le diorganopolysiloxane comprenant un groupement hydroxy à chaque extrémité de sa chaîne a pour formule : 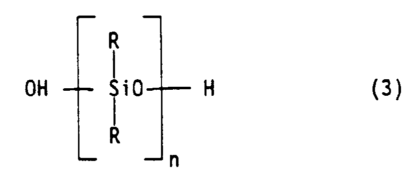
- où R¹, R² et R⁴ ont la même signification que celle donnée ci-avant pour le silane de formule (1),
- où les radicaux R, identiques ou différents représentent des radicaux monovalents hydrocarbonés ayant de 1 à 10 atomes de carbone, éventuellement substitués par des atomes d'halogènes ou des groupes cyano. De préférence les radicaux R sont choisis parmi les radicaux méthyle, phényle, vinyle et trifluoro-3,3,3 propyle.
- où a est 0, ou 1, ou 2,
- où c = 0, ou 1, ou 2,
- où a + c = 0, ou 1, ou 2,
- où n a une valeur suffisante pour conférer aux polymères de formule (2) et (3) une viscosité de 25 à 1 000 000 mPa.s à 25°C, étant entendu que le polysiloxane de formule (2) peut avoir une formule moyenne dans laquelle la valeur de n est plus forte ou plus faible que la valeur de n du diorganopolysiloxane (3) réagissant sur le silane de formule (1).

Les radicaux R mentionnés ci-avant comprennent :
- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle.
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle.
   - les radicaux alcényles ayant de 2 à 4 atomes de carbone tels que les radicaux vinyle, allyle, butène-2 yle.
   - les radicaux aryles et halogénoaryles mononucléaires ayant de 6 à 10 atomes de carbone tels que les radicaux phényle, tolyle, xylyle, chlorophényle, dichlorophényle, trichlorophényle.
   - les radicaux cyanoalkyles dont les chaînons alkyles ont de 2 à 3 atomes de carbone tels que les radicaux β-cyanoéthyle et - cyanopropyle.

A titre d'exemples concrets de motifs R₂SiO présents dans l'alpha, oméga dihydroxydiorganopolysiloxane de formule (3) on peut citer :

(CH₃)₂SiO,

CH₃(CH₂=CH)SiO

CH₃(C₆H₅)SiO

(C₆H₅)₂SiO,

CF₃CH₂CH₂(CH₃)SiO

NC-CH₂CH₂(CH₃)SiO

NC-CH(CH₃)CH₂(CH₂=CH)SiO

NC-CH₂CH₂CH₂(C₆H₅)SiO

Il doit être compris que dans le procédé selon la présente invention, on peut utiliser comme polymère de formule (3) un mélange constitué de polymères alpha, oméga-di(hydroxy)- diorganopolysiloxanes qui diffèrent entre eux par le poids moléculaire et/ou la nature des groupements liés aux atomes de silicium. Il doit être indiqué de plus que le polymère de formule (3) peut éventuellement comprendre des motifs monoorganosiloxy RSiO_{1,5} et/ou des motifs SiO₂, dans la proportion d'au plus 2 % par rapport au nombre de motifs diorganosiloxy R₂SiO.

Ces polymères alpha, oméga-di(hydroxy)diorganopolysiloxanes sont commercialisés ; en outre, ils peuvent être aisément fabriqués selon des techniques maintenant bien connues.

Parmi les polyalcoxysilanes de formule (R⁴)_{c}(R¹)ₐSi(OR²)_{4-(a+c)} pouvant être utilisés dans le procédé selon la présente invention on peut notamment citer ceux ci-après :

Si(OCH₃)₄

Si(OCH₂CH₃)₄

Si(OCH₂CH₂CH₃)₄

(CH₃O)₃SiCH₃

(C₂H₅O)₃SiCH₃

(CH₃O)₃SiCH = CH₂

(C₂H₅O)₃SiCH = CH₂

(CH₃O)₃SiCH₂-CH = CH₂

(CH₃O)₃Si [CH₂-(CH₃)C = CH₂]

(C₂H₅O)₃Si(OCH₃)

Si(OCH₂-CH₂-OCH₃)₄

CH₃Si(OCH₂-CH₂-OCH₃)₃

CH₂ = CHSi(OCH₂CH₂OCH₃)₃

C₆H₅Si(OCH₃)₃

C₆H₅Si(OCH₂-CH₂-OCH₃)₃

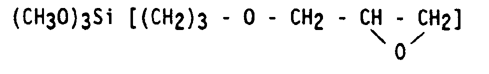

(CH₃O)₃Si [(CH₂)₂ - CH₂ Cl]

(CH₃O)₃Si [(CH₂)₃ - OOC - (CH₃) C = CH₂]

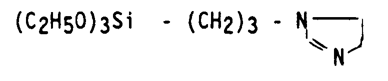

(C₂H₅O)₃Si (CH₂)₂ - CH₂Cl

(CH₃O)₃Si (CH₂)₃ - NH₂

(C₂H₅O)₃Si (CH₂)₃ - NH₂

(CH₃O)₃Si (CH₂)₃ - NH - (CH₂)₂ - NH₂

(C₂H₅O)₃Si (CH₂)₃ - NH - (CH₂)₂ - NH₂

(CH₃O)₃-Si(CH₂)₃ - SH

(CH₃) (CH₂ = CH)Si(OCH₃)₂

Les polyalcoxysilanes les plus couramment utilisés sont :
Si(OC₂H₅)₄ , CH₃Si(OCH₃)₃ , CH₃Si(OC₂H₅)₃ , (C₂H₅O)₃Si(OCH₃) , CH₂ = CH - Si(OCH₃)₃ , CH₃(CH₂=CH)Si(OCH₃)₂ , CH₂ = CH - Si(OC₂H₅)₃.

En ce qui concerne la soude ou la potasse mise en oeuvre en tant que catalyseur, les deux se trouvent largement dans le commerce.

Par quantité catalytiquement efficace de soude ou de potasse on entend une quantité telle que la vitesse de réaction est notablement améliorée, notamment en utilisant du CH₃Si(OCH₃)₃, du CH₂=CH-Si(OCH₃)₃ ou du MeViSi(OCH₃)₃ comme agent de fonctionnalisation. Dans la plupart des cas, on utilise de 0,001 à 5 moles de soude ou de potasse pour 1 mole de groupement silanol ≡SiOH de polydiorganopolysiloxane de formule (3), étant entendu que pour avoir 1 mole de ≡SiOH il faut 0,5 mole du polydiorganopolysiloxane de formule (3).

La température de la réaction selon la présente invention peut être comprise entre - 10°C et 90°C, et elle est de préférence comprise entre 10°C et 50°C.

Le procédé selon la présente invention est mis en oeuvre de préférence à l'abri de l'humidité, par exemple dans un réacteur fermé muni d'une agitation dans lequel on a fait le vide, puis remplace l'air chassé par un gaz anhydre, par exemple par de l'azote.

On charge les réactifs et le catalyseur dans le réacteur et lorsque la réaction de fonctionnalisation est terminée on procéde à la neutralisation du catalyseur et à la dévolatilisation de la masse réactionnelle obtenue pour en éliminer l'alcool formé au cours de la réaction de fonctionnalisation et l'excès de l'agent de fonctionnalisation (c'est-à-dire le silane de formule (1)).

Pour neutraliser le catalyseur de fonctionnalisation (la soude ou la potassse) de nombreux produits peuvent être utilisés, par exemple du trichloroéthylphosphate ou du diméthylvinylsilylacétate. On préfère cependant utiliser un silylphosphate, tel que par exemple ceux décrits dans le brevet français 2 410 004.

La dévolatisation est effectuée par exemple sous une pression absolue comprise entre 133 et 13332 pascals.

La demande de brevet selon la présente invention concerne de plus l'utilisation des diorganopolysiloxanes, notamment ceux comprenant au moins deux groupements alcoxy à chaque extrémité de chaîne, obtenus selon le procédé de la présente invention, pour la préparation de compositions polysiloxanes monocomposantes stables au stockage en absence d'humidité et réticulant en élastomère en présence d'humidité.

Ces compositions sont obtenues en ajoutant (en poids) à 100 parties du polymère fonctionnalisée de formule (2) obtenu selon le procédé de la présente invention (contenant le produit de neutralisation de la soude ou de la potasse) :
- 0 à 250 parties de charges minérales,
- 0 à 20 parties, de préférence 0 à 10 parties d'au moins un additif choisi parmi des aminoorganosilanes, aminoorganopolysiloxanes et guanidinoorganosilanes portant par molécule à la fois :
   . (i) au moins un groupe organique en C₃-C₁₅ lié par une liaison SiC à l'atome de silicium et substitué par au moins un radical amino ou un radical guanidino.
   . (2i) et au moins un radical alcoxy en C₁-C₅ ou un radical alcoxyalkylène-oxy en C₃-C₆.
- une quantité efficace d'un catalyseur de condensation.

Par quantité efficace de catalyseur de condensation, on entend par exemple de 0,001 à 1 partie en poids d'au moins un composé d'un métal choisi généralement parmi l'étain, le titane et le zirconium et leurs mélanges.

Comme catalyseur de condensation on peut utiliser les monocarboxylates et les dicarboxylates d'étain tels que l'éthyl-2 hexanoate d'étain, le dilaurate de dibutylétain, le diacétate de dibutylétain (voir le livre de NOLL "Chemistry and technology of silicone", page 337, Academic Press, 1968 - 2ème édition).

Les chelates d'étain de valence IV hexacoordinés tels que ceux décrits dans la demande de brevet européen EP-A-147 323 et le brevet US-A 4 517 337 cités comme référence sont particulièrement appropriés.

Sont également préférés, les catalyseurs de condensation qui sont un mélange d'un bis(β-dicétonate) de diorganoétain avec un dérivé organique de l'étain également de valence IV, mais exempt de fonction β-dicétonato, et possèdant au moins un atome d'étain, chaque atome d'étain portant deux radicaux organiques liés par une liaison Sn-C, les deux autres valences étant satisfaites au moyen de radicaux choisis parmi les radicaux organiques ou inorganiques liés par une liaison SnO, SnS, par des atomes d'halogènes, par des groupes hydroxy et par des atomes d'oxygène.

Ces dérivés organiques de l'étain de valence IV exempts de fonction β-dicétonato peuvent être en particulier des sels d'étain répondant aux formules :

A₂SnR⁶₂

R⁶SnO,

AR⁶₂SnOSnR⁶₂A

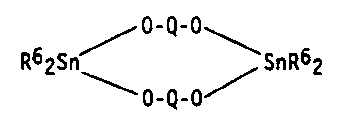

dans lesquelles :
- R⁶ représente un radical hydrocarboné, halogéné ou non, en C₁-C₂₀,
- A représente un radical organique ou inorganique, lié à l'atome d'étain par une liaison Sn-O ou Sn-S, un atome d'halogène,
- Q représente un radical alkylène en C₂-C₁₀, A peut être choisi dans le groupe constitué :
   . (i) des radicaux mono-carboxylates de formule R⁷COO, R⁷ étant un radical hydrocarboné, halogéné ou non, en C₁-C₂₀,
   . (2i) des radicaux dicarboxylates de formule 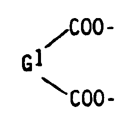 liés à un même atome d'étain ou à deux atomes d'étain conduisant aux deux formules : 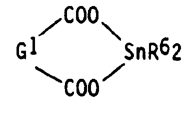 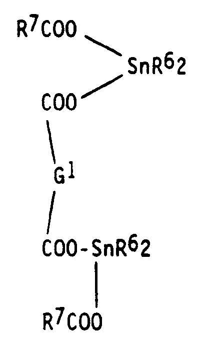 dans lesquelles G¹ représente un radical hydrocarboné divalent en C₁-C₁₅ et R⁷ a la signification donnée sous (i),
   . (3i) des radicaux dicarboxylates de formule R⁷OCOG¹COO dans laquelle R⁷ et G¹ ont la signification donnée respectivement sous (i) et (2i).

Les sels d'étain ci-dessous sont bien connus et son décrits en particulier dans l'ouvrage de NOLL précité, les brevets US-A-3 186 963, 3 862 919, le brevet belge 842 305 et le brevet britannique GB-A-1 289 900 cités comme référence.

Les charges minérales sont utilisées à raison de 0 à 250 parties, de préférence de 5 à 200 parties pour 100 parties de PF de formule (2).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 m2/g.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 m2/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevet français FR-A-1 126 884, FR-A-1 136 885, FR-A-1 236 505 ; brevet anglais GB-A-1 024 234). Les charges traitées renferment, dans la plupart des cas, de 3 à 30 % de leurs poids de composés organosiliciques.

Les charges peuvent être constituées d'un mélange de plusieurs types de charges de granulométrie différente ; ainsi par exemple, elles peuvent être constituées de 30 à 70 % de silices finement divisées de surface spécifique BET supérieure à 40 m2/g et de 70 à 30 % de silices plus grossièrement divisées de surface spécifique inférieure à 30 m2/g.

Les compositions selon l'invention peuvent éventuellement contenir en outre pour améliorer notamment l'adhérence des EVF de 0 à 20 parties, de préférence de 1 à 15 parties d'au moins un additif choisi parmi des aminoorganosilanes, aminoorganopolysiloxanes et guanidinoorganosilanes portant par molécule à la fois :
. (i) au moins un groupe organique en C₃-C₁₅ lié par une liaison SiC à l'atome de silicium et substitué par au moins un radical amino ou un radical guanidino.
. (2i) et au moins un radical alcoxy en C₁-C₅ ou un radical alcoxyalkylène en C₃-C₆.

Ces additifs et leurs modes d'utilisation sont en particulier décrits dans les brevets US-A-2 754 311, US-A-2 832 754, US-A-2 930 809, US-A-2 971 864, US-A-3 341 563, US-A-3 686 375, US-A-4 180 642.

Parmi ces additifs on peut en particulier citer les silanes de formule :

H₂N(CH₂)₃Si(OC₂H₅)₃

H₂N(CH₂)₃Si(OCH₃)₃

H₂N(CH₂)₂NH(CH₂)₃Si(OCH₃)₃

Des promoteurs d'adhérence particulièrement appropriés sont les silanes de formule :

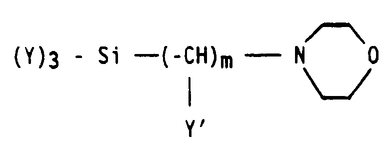

Dans laquelle Y est un radical alkyle ou alcoxy ayant inclusivement de 1 à 4 atomes de carbone, au moins deux des radicaux Y étant des radicaux alcoxy, Y' identiques ou différents sont choisis parmi l'atome d'hydrogène et un radical alkyle ayant inclusivement de 1 à 3 atomes de carbone et m est un nombre entier compris entre 3 et 10 inclusivement.

Comme silane on peut citer : 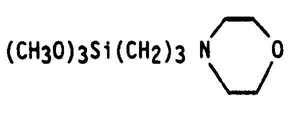
gammamorpholinopropyltriméthoxysilane 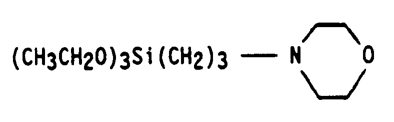
gammamorpholinopropyltriéthoxysilane.

Ces produits et leur procédé de préparation sont décrits par John L. SPEIER, I. Org. Chem., vol. 36, n° 21, 1971, page 3 120.

Dans ce qui suit ou ce qui précède, sauf mentions contraires expresses, les pourcentages et les parties sont en poids.

Les exemples suivants illustrent l'invention, sans en limiter sa portée.

Dans ces exemples :
M̅n est la masse moléculaire moyenne en nombre,
n est la viscosité exprimée en mPa.s.

### EXEMPLE 1

On introduit dans un réacteur 100 g d'un α ω-dihydroxypolydiméthylsiloxane de viscosité η= 175000 mPa.s à 25°C et de M̅n = 75000, contenant 450 ppm de groupements hydroxy (0,0026 motifs SiOH pour 100 g de polymère).

On introduit également dans ce réacteur de l'azote anhydre et, sous agitation, on introduit, à la température ambiante (25°C), 1 g (0,0067 mole) de vinyltriméthoxysilane et 0,0160 g (0,0004 mole) de soude de formule NaOH.

On laisse réagir durant 1 heure à une température de 25°C, puis on neutralise par 0,218 g de phosphate de silyle présentant une teneur équivalente en acide phosphorique de 12,5 % et préparé selon l'exemple 2 du brevet français 2 410 004.

Après dévolatilisation de l'alcool formé (sous 16 x 133,32 pascals), on obtient une huile de viscosité η = 178000 mPa.s à 25°C. Les analyses par RMN¹ H, RMN²⁹ Si et par IR montrent que cette huile est dépourvue de groupement silanol et qu'elle a une structure de formule :

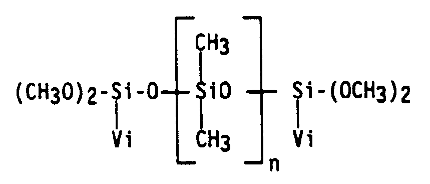

Un dosage intermédiaire montre, qu'après 7 minutes de réaction, il n'y a déjà plus de groupement silanol.

### EXEMPLE COMPARATIF 2

On opère selon l'exemple 1 en ne modifiant que la quantité introduite de vinyltriméthoxysilane : 5 g (0,034 mole), c'est-à-dire en excès.

Après 1 heure de réaction à une température de 25°C, on constate la disparition des groupements silanols mais la viscosité du polymère obtenu n'est plus que de 15000 mPa.s à 25°C.

Les réactions de dégradation du polymère fonctionnalisé ont diminué fortement la viscosité de celui-ci.

### EXEMPLE 3

On opère selon l'exemple 1 en remplaçant la soude introduite par 0,0080 g (0,00014 mole) de potasse, de formule KOH et en neutralisant la potasse, après 1 heure de réaction, par 0,076 g de phosphate de silyle (12,5 % en acide phosphorique).

L'huile obtenue est de viscosité η = 120000 mPa.s à 25°C.

Les analyses par RMN¹ H, RMN²⁹ Si et par IR montrent que cette huile est dépourvue de groupement silanol.

### EXEMPLE COMPARATIF 4

On opère selon l'exemple 1 en remplaçant la soude par 0,0080 g (0,00014 mole) de potasse et en modifiant la quantité de vinyltriméthoxysilane : 2,5 g (0,017 mole), c'est-à-dire en excès ; et la potasse étant neutralisée, après 1 heure de réaction, par 0,076 g de phosphate de silyle (12,5 % en acide phosphorique).

Après 1 heure de réaction à une température de 25°C, on constate la disparition des groupements silanols mais la viscosité du polymère obtenu est de 20000 mPa.s à 25°C.

Les réactions de dégradation du polymère fonctionnalisé ont diminué fortement la viscosité de celui-ci.

### EXEMPLE 5

On opère selon l'exemple comparatif 4 en ajoutant au mélange réactionnel 2,5 g (0,017 mole) de méthanol.

Après une heure de réaction, le polymère obtenu possède une viscosité η = 140 000 mPa.s à 25°C et le polymère est dépourvu de groupement silanol.

### EXEMPLE 6

On opère selon l'exemple 1, en introduisant :
- 100 g de l'α,ω-dihydroxypolydiméthylsiloxane
- 2,5 g (0,017 mole) de vinyltriméthoxysilane (excès)
- 0,016 g (0,0004 mole) de soude
- 2,5 g (0,078 mole) de méthanol.

On laisse réagir durant 1 heure, puis on neutralise.

Après dévolatisation de l'excès de vinyltriméthoxysilane et de l'alcool, on obtient une huile de viscosité η = 128000 mPa.s à 25°C et de masse moléculaire moyenne en nombre M̅n = 73000.

Les analyses par RMN¹ H, RMN²⁹ Si et par IR montrent que cette huile est totalement fonctionnalisée : absence de groupement silanol.

### EXEMPLE COMPARATIF 7

On opère selon l'exemple 6, en n'introduisant pas de méthanol, on est donc en excès de vinyltriméthoxysilane, cet excès n'étant pas compensé par la présence d'au moins un alcool volatile.

On constate, après 1 heure de réaction à une température de 25°C, la disparition des groupements silanols mais la viscosité du polymère obtenu à 25°C est de 50000 mPa.s, ce qui est confirmé par la masse moléculaire moyenne en nombre de ce même polymère : M̅n = 59000.

### EXEMPLE COMPARATIF 8

On opère selon l'exemple 1, en utilisant les quantités des réactifs suivants :
- 100 g de l'α,ω-dihydroxypolydiméthylsiloxane
- 5 g (0,34 mole) de vinyliriméthoxysilane (excès)
- 0,0110 g (0,0002 mole) de potasse.

Après 1 heure de réaction à 25°C, on neutralise par 0,107 g de phosphate de silyle (12,5 % d'acide phosphorique).

Le polymère obtenu possède une viscosité η = 6400 mPa.s à 25°C.

### EXEMPLE 9

On opère selon l'exemple comparatif 8, en ajoutant au mélange réactionnel 5 g (0,034 mole) de méthanol.

Après une heure de réaction, le polymère obtenu possède une viscosité η = 104 000 mPa.s à 25°C et est dépourvu de groupement silanol.

### EXEMPLE COMPARATIF 10

On opère selon l'exemple 1, en utilisant les quantités des réactifs suivants :
- 100 g de l'α,ω-dihydroxypolydiméthylsiloxane
- 2,5 g (0,017 mole) de vinyltriméthoxysilane (excès)
- 0,0110 g (0,0002 mole) de potasse.

Après 1 heure de réaction à 25°C, on neutralise par 0,107 g de silyle (12,5 % d'acide phosphorique).

Le polymère obtenu possède une viscosité η = 20000 mPa.s à 25°C.

### EXEMPLE 11

On opère selon l'exemple comparatif 10, en rajoutant au mélange réactionnel 2,5 g (0,054 mole) d'éthanol, de formule C₂H₅OH.

Le polymère obtenu possède une viscosité η = 92000 mPa.s à 25°C et est dépourvu de groupement silanol.

### EXEMPLE 12

On opère selon l'exemple comparatif 10, en ajoutant au mélange réactionnel 5 g (0,083 mole) de propanol 2.

Le polymère obtenu possède une viscosité η = 85000 mPa.s à 25°C et est dépourvu de groupement silanol.

## Revendications

1. Procédé pour la préparation de diorganopolysiloxane linéaire comprenant au moins un groupement alcoxy lié à un atome de silicium à chaque extrémité de sa chaîne, ledit procédé étant caractérisé en ce que l'on fait réagir :
- 100 parties en poids d'au moins un diorganopolysiloxane linéaire comprenant un groupement hydroxy lié à un atome de silicium à chaque extrêmité de sa chaîne,
- 0,35 à 6 parties en poids d'au moins un polyalcoxysilane de formule :
(R⁴)_{c} (R¹)ₐ Si(OR²)_{4-(a + c)} (1)
- 0,5 à 15 parties en poids d'au moins un alcool,
en présence d'une quantité catalytiquement efficace de soude de formule NaOH ou de potasse de formule KOH,
- où a est 0 ou 1, ou 2,
- où c est 0 ou 1, ou 2,
- où a + c = 0 ou 1 ou 2,
- où R¹ représente un radical monovalent hydrocarboné saturé ou non en C₁ à C₁₃, substitué ou non substitué, aliphatique, cyclanique ou aromatique, pouvant comporter une fonction époxy, amine primaire, secondaire, tertiaire, mercapto.
- où R² représente un radical organique aliphatique ayant de 1 à 8 atomes de carbone ou un radical aralkyle ayant de 7 à 13 atomes de carbone, étant entendu que les groupements alcoxy du silane de formule (1) peuvent avoir chacun une signification différente pour R² ou la même signification,
- où R⁴ représente un radical monovalent hydrocarboné saturé ou non en C₁ à C₁₃ substitué ou non, aliphatique, cyclanique ou aromatique, R⁴ pouvant être identique à R¹.

2. Procédé selon la revendication 1, caractérisé en ce que la quantité d'au moins un alcool est comprise entre 2 et 5 parties en poids.

3. Procédé selon la revendication 1 ou 2 caractérisé en ce que ledit alcool est le méthanol.

4. Procédé pour la préparation de diorganopolysiloxane linéaire comprenant au moins un groupement alcoxy lié à un atome de silicium à chaque extrémité de sa chaîne, ledit procédé étant caractérisé en ce que l'on fait réagir une mole d'au moins un diorganopolysiloxane comprenant un groupement hydroxy lié à un atome de silicium à chaque extrémité de sa chaîne, avec de 2 à 6 moles d'au moins un polyalcoxysilane de formule :
(R⁴)_{c} (R¹)ₐ Si(OR²)_{4-(a + c)} (1)
en présence d'une quantité catalytiquement efficace de soude de formule NaOH ou de potasse de formule KOH,
- où a est 0 ou 1, ou 2,
- où c est 0 ou 1, ou 2,
- où a + c = 0 ou 1 ou 2,
- où R¹ représente un radical monovalent hydrocarboné saturé ou non en C₁ à C₁₃, substitué ou non substitué, aliphatique, cyclanique ou aromatique,
- où R² représente un radical organique aliphatique ayant de 1 à 8 atomes de carbone ou un radical aralkyle ayant de 7 à 13 atomes de carbone, étant entendu que les groupements alcoxy du silane de formule (1) peuvent avoir chacun une signification différente pour R² ou la même signification,
- où R⁴ représente un radical monovalent hydrocarboné saturé ou non en C₁ à C₁₃ substitué ou non, aliphatique, cyclanique ou aromatique, R⁴ pouvant être identique à R¹.

5. Procédé selon la revendication 4, caractérisé en ce que la soude ou la potasse est en solution dans un alcool.

6. Procédé selon l'une quelconque des revendications précédentes, caractérisé en ce que l'on utilise de 0,001 à 5 moles de soude ou de potasse pour une mole de groupement silanol ≡SiOH de diorganopolysiloxane.

7. Procédé selon l'une quelconque des revendications précédentes, caractérisé en ce que la températue est comprise entre - 10°C et 90°C.

8. Procédé selon l'une quelconque des revendications précédentes, caractérisé en ce que le diorganopolysiloxane linéaire comprenant au moins un groupement alcoxy à chaque extrémité de chaîne a pour formule : 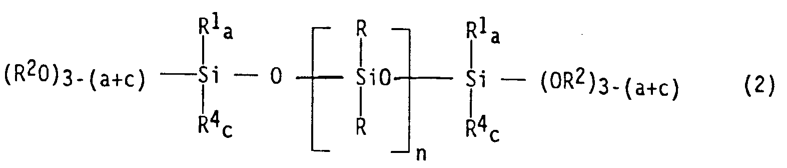 et en ce que le diorganopolysiloxane linéaire comprenant un groupement hydroxy à chaque extrémité de sa chaîne a pour formule 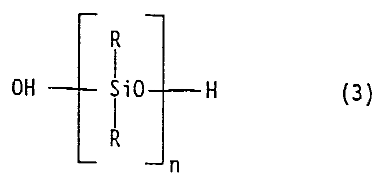
- où R¹, R² et R⁴ ont la même signification que celle donnée dans la revendication 1,
- où les radicaux R, identiques ou différents représentent des radicaux monovalents hydrocarbonés ayant de 1 à 10 atomes de carbone, éventuellement substitués par des atomes d'halogènes ou des groupes cyano,
- où a est 0, ou 1, ou 2,
- où c = 0, ou 1, ou 2,
- où a + c = 0, ou 1 ou 2,
- où n a une valeur suffisante pour conférer aux diorganopolysiloxanes de formule (2) et (3) une viscosité de 25 à 1000000 mPa.s à 25°C.

9. Procédé selon la revendication 8 caractérisé en ce que le radical R dans les formules (2) et (3) est choisi parmi les radicaux méthyle, phényle, vinyle et trifluoropropyle.

10. Procédé selon l'une quelconque des revendications précédentes caractérisé en ce que le polyalcoxysilane de formule (1) est choisi parmi le méthyltriméthoxysilane, le méthyltriéthoxysilane, le vinyltriméthoxysilane, le tétraéthoxysilane, le vinyltriéthoxysilane, le méthylvinyldiméthoxysilane.

11. Procédé selon la revendication 8, caractérisé en ce que la réaction de fonctionnalisation entre le produit de formule (1) et le produit de formule (3) est terminée en moins de 10 minutes.

12. Procédé selon la revendication 8, caractérisé en ce qu'à la fin de la réaction de fonctionnalisation entre le produit de formule (3) et le produit de formule (1) on neutralise la soude ou la potasse utilisée.

13. Procédé selon l'une quelconque des revendications précédentes caractérisé en ce que la soude ou la potasse est neutralisée par du phosphate de silyle.

## Patentansprüche

1. Verfahren zur Herstellung eines linearen Diorganopolysiloxans, enthaltend zumindest eine an ein Siliciumatom gebundene Alkoxygruppe an jedem Ende seiner Kette, dadurch gekennzeichnet, daß man umsetzt:
- 100 Gewichtsteile zumindest eines linearen Diorganopolysiloxans, das eine an ein Siliciumatom gebundene Hydroxygruppe an jedem Ende seiner Kette enthält,
- 0,35 bis 6 Gewichtsteile zumindest eines Polyalkoxysilans der Formel
(R⁴)_{c}(R¹)ₐSi(OR²)_{4-(a+c)} (1)
- 0,5 bis 15 Gewichtsteile zumindest eines Alkohols, in Gegenwart einer katalytisch wirksamen Menge Natronlauge der Formel NaOH oder Kalilauge der Formel KOH,
- worin a für 0 oder 1 oder 2 steht,
- worin c für 0 oder 1 oder 2 steht,
- worin a+c = 0 oder 1 oder 2,
- worin R¹ einen aliphatischen, cyclanischen oder aromatischen, substituierten oder unsubstituierten, gesättigten oder ungesättigten einwertigen C₁-C₁₃-Kohlenwasserstoffrest bedeutet, der eine Epoxy-, primäre, sekundäre, tertiäre Amin-, Mercaptofunktion aufweisen kann,
- worin R² einen aliphatischen organischen Rest mit 1 bis 8 Kohlenstoffatomen oder einen Aralkylrest mit 7 bis 13 Kohlenstoffatomen bedeutet, mit der Maßgabe, daß die Alkoxygruppen des Silans der Formel (1) jeweils eine unterschiedliche Bedeutung für R² oder die gleiche Bedeutung besitzen können,
- worin R⁴ einen aliphatischen, cyclanischen oder aromatischen, substituierten oder unsubstituierten, gesättigten oder ungesättigten einwertigen C₁-C₁₃-Kohlenwasserstoffrest bedeutet, wobei R⁴ mit R¹ identisch sein kann.

2. Verfahren gemäß Anspruch 1, dadurch gekennzeichnet, daß die Menge zumindest eines Alkohols zwischen 2 und 5 Gewichtsteilen liegt.

3. Verfahren gemäß Anspruch 1 oder 2, dadurch gekennzeichnet, daß der Alkohol Methanol ist.

4. Verfahren zur Herstellung eines linearen Diorganopolysiloxans, das zumindest eine an ein Siliciumatom gebundene Alkoxygruppe an jedem Ende seiner Kette enthält, das dadurch gekennzeichnet ist, daß man ein Mol zumindest eines Diorganopolysiloxans, welches eine an ein Siliciumatom gebundene Hydroxygruppe an jedem Ende seiner Kette aufweist, mit 2 bis 6 Molen zumindest eines Polyalkoxysilans der Formel
(R⁴)_{c}(R¹)ₐSi(OR²)_{4-(a+c)} (1)
in Gegenwart einer katalytisch wirksamen Menge Natronlauge der Formel NaOH oder von Kalilauge der Formel KOH umsetzt,
- worin a 0 oder 1 oder 2 ist,
- worin c 0 oder 1 oder 2 ist,
- worin a+c = 0 oder 1 oder 2,
- worin R¹ einen aliphatischen, cyclanischen oder aromatischen, substituierten oder unsubstituierten, gesättigten oder ungesättigten einwertigen C₁-C₁₃-Kohlenwasserstoffrest bedeutet,
- worin R² einen aliphatischen, organischen Rest mit 1 bis 8 Kohlenstoffatomen oder einen Aralkylrest mit 7 bis 13 Kohlenstoffatomen bedeutet, mit der Maßgabe, daß die Alkoxygruppen des Silans der Formel (1) jeweils eine verschiedene Bedeutung für R² oder die gleiche Bedeutung haben können,
- worin R⁴ einen aliphatischen, cyclanischen oder aromatischen, substituierten oder unsubstituierten, gesättigten oder ungesättigten einwertigen C₁-C₁₃-Kohlenwasserstoffrest bedeutet, wobei R⁴ mit R¹ identisch sein kann.

5. Verfahren gemäß Anspruch 4, dadurch gekennzeichnet, daß die Natronlauge oder die Kalilauge in Lösung in einem Alkohol vorliegt.

6. Verfahren gemäß einem der vorhergehenden Ansprüche, dadurch gekennzeichnet, daß man 0,001 bis 5 Mol Natronlauge oder Kalilauge je ein Mol Silanolgruppe =SiOH des Diorganopolysiloxans verwendet.

7. Verfahren gemäß einem der vorhergehenden Ansprüche, dadurch gekennzeichnet, daß die Temperatur zwischen -10 und 90°C liegt.

8. Verfahren gemäß einem der vorhergehenden Ansprüche, dadurch gekennzeichnet, daß das zumindest eine Alkoxygruppe an jedem Ende der Kette aufweisende lineare Diorganopolysiloxan die Formel 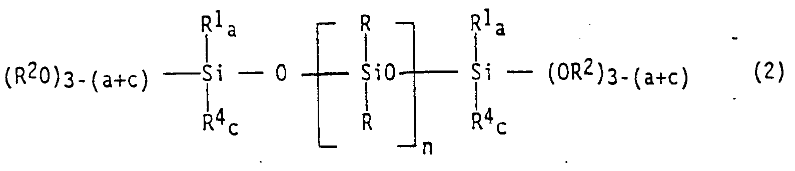 besitzt und daß das eine Hydroxygruppe an jedem Ende seiner Kette aufweisende lineare Diorganopolysiloxan die Formel 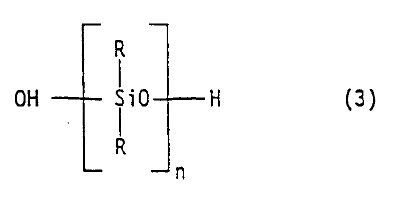 besitzt,
- worin R¹, R² und R⁴ die in Anspruch 1 angegebene Bedeutung besitzen,
- worin die Reste R, identisch oder verschieden, einwertige Kohlenwasserstoffreste mit 1 bis 10 Kohlenstoffatomen, die gegebenenfalls durch Halogenatome oder durch Cyanogruppen substituiert sind, bedeuten,
- worin a für 0 oder 1 oder 2 steht,
- worin c = 0 oder 1 oder 2,
- worin a+c = 0 oder 1 oder 2,
- worin n einen ausreichenden Wert aufweist, um den Diorganopolysiloxanen der Formel (2) und (3) eine Viskosität von 25 bis 1 000 000 mPa.s bei 25°C zu verleihen.

9. Verfahren gemäß Anspruch 8, dadurch gekennzeichnet, daß der Rest R in den Formeln (2) und (3) unter den Methyl-, Phenyl-, Vinyl- und Trifluorpropylresten ausgewählt wird.

10. Verfahren gemäß einem der vorhergehenden Ansprüche, dadurch gekennzeichnet, daß das Polyalkoxysilan der Formel (1) unter Methyltrimethoxysilan, Methyltriethoxysilan, Vinyltrimethoxysilan, Tetraethoxysilan, Vinyltriethoxysilan, Methylvinyldimethoxysilan ausgewählt wird.

11. Verfahren gemäß Anspruch 8, dadurch gekennzeichnet, daß die Funktionalisierungsreaktion zwischen dem Produkt der Formel (1) und dem Produkt der Formel (3) innerhalb weniger als 10 Minuten beendet wird.

12. Verfahren gemäß Anspruch 8, dadurch gekennzeichnet, daß man am Ende der Funktionalisierungsreaktion zwischen dem Produkt der Formel (3) und dem Produkt der Formel (1) die verwendete Natronlauge oder Kalilauge neutralisiert.

13. Verfahren gemäß einem der vorhergehenden Ansprüche, dadurch gekennzeichnet, daß die Natronlauge oder die Kalilauge mit Silylphosphat neutralisiert wird.

## Claims

1. Process for the preparation of straight-chain diorganopolysiloxane comprising at least one alkoxy group linked to a silicon atom at each end of its chain, the said process being characterized in that:
- 100 parts by weight of at least one straight-chain diorganopolysiloxane comprising a hydroxyl group linked to a silicon atom at each end of its chain,
- 0.35 to 6 parts by weight of at least one polyalkoxysilane of formula:
(R⁴)_{c} (R¹)ₐ Si(OR²)_{4-(a + c)} (1)
- and 0.5 to 15 parts by weight of at least one alcohol,
are reacted in the presence of a catalytically effective quantity of sodium hydroxide of formula NaOH or potassium hydroxide of formula KOH,
- where a is 0 or 1, or 2,
- where c is 0 or 1, or 2,
- where a + c = 0 or 1 or 2,
- where R¹ represents a substituted or unsubstituted, saturated or unsaturated, C₁ to C₁₃ aliphatic, cycloalkane or aromatic monovalent hydrocarbon radical, which may comprise an epoxy, primary, secondary or tertiary amine or mercapto group,
- where R² represents an aliphatic organic radical having from 1 to 8 carbon atoms or an aralkyl radical having from 7 to 13 carbon atoms, it being understood that the alkoxy groups in the silane of formula (1) may each have a different meaning for R² or the same meaning, and
- where R⁴ represents a substituted or unsubstituted, saturated or unsaturated, C₁ to C₁₃ aliphatic, cycloalkane or aromatic monovalent hydrocarbon radical, it being possible for R⁴ to be identical to R¹.

2. Process according to Claim 1, characterized in that the quantity of at least one alcohol is between 2 and 5 parts by weight.

3. Process according to Claim 1 or 2, characterized in that the said alcohol is methanol.

4. Process for the preparation of straight-chain diorganopolysiloxane comprising at least one alkoxy group linked to a silicon atom at each end of its chain, the said process being characterized in that one mole of at least one diorganopolysiloxane comprising a hydroxyl group linked to a silicon atom at each end of its chain is reacted with 2 to 6 moles of at least one polyalkoxysilane of formula:
(R⁴)_{c} (R¹)ₐ Si(OR²)_{4-(a + c)} (1)
in the presence of a catalytically effective quantity of sodium hydroxide of formula NaOH or potassium hydroxide of formula KOH,
- where a is 0 or 1, or 2,
- where c is 0 or 1, or 2,
- where a + c = 0 or 1 or 2,
- where R¹ represents a substituted or unsubstituted, saturated or unsaturated, C₁ to C₁₃ aliphatic, cycloalkane or aromatic monovalent hydrocarbon radical,
- where R² represents an aliphatic organic radical having from 1 to 8 carbon atoms or an aralkyl radical having from 7 to 13 carbon atoms, it being understood that the alkoxy groups in the silane of formula (1) may each have a different meaning for R² or the same meaning, and
- where R⁴ represents a substituted or unsubstituted, saturated or unsaturated, C₁ to C₁₃ aliphatic, cycloalkane or aromatic monovalent hydrocarbon radical, it being possible for R⁴ to be identical to R¹.

5. Process according to Claim 4, characterized in that the sodium hydroxide or potassium hydroxide is in solution in an alcohol.

6. Process according to any one of the preceding claims, characterized in that from 0.001 to 5 moles of sodium hydroxide or potassium hydroxide are used per mole of silanol group ≡SiOH in the diorganopolysiloxane.

7. Process according to any one of the preceding claims, characterized in that the temperature is between -10°C and 90°C.

8. Process according to any one of the preceding claims, characterized in that the straight-chain diorganopolysiloxane comprising at least one alkoxy group at each end of the chain has the formula: 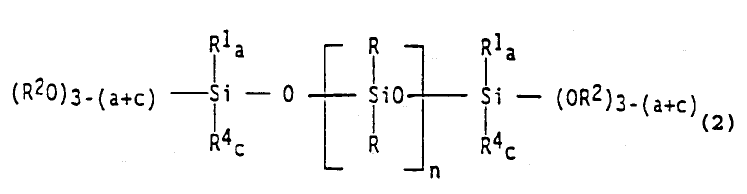 and in that the straight-chain diorganopolysiloxane comprising a hydroxyl group at each end of its chain has the formula 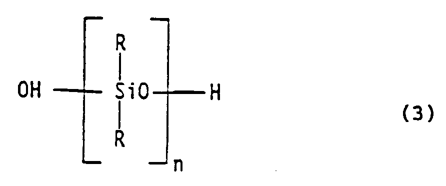
- where R¹, R² and R⁴ have the same meaning as that given in Claim 1,
- where the radicals R, which may be identical or different, represent monovalent hydrocarbon radicals having from 1 to 10 carbon atoms, which may be optionally substituted by halogen atoms or cyano groups,
- where a is 0, or 1, or 2,
- where c = 0, or 1, or 2,
- where a + c = 0, or 1 or 2, and
- where n has a value sufficient to confer on the diorganopolysiloxanes of formula (2) and (3) a viscosity of 25 to 1,000,000 mPa s at 25°C.

9. Process according to Claim 8, characterized in that the radical R in the formulae (2) and (3) is chosen from methyl, phenyl, vinyl and trifluoropropyl radicals.

10. Process according to any one of the preceding claims, characterized in that the polyalkoxysilane of formula (1) is chosen from methyltrimethoxysilane, methyltriethoxysilane, vinyltrimethoxysilane, tetraethoxysilane, vinyltriethoxysilane and methylvinyldimethoxysilane.

11. Process according to Claim 8, characterized in that the reaction, for the introduction of functional groups, between the product of formula (1) and the product of formula (3) is complete in less than 10 minutes.

12. Process according to Claim 8, characterized in that at the end of the reaction, for the introduction of functional groups, between the product of formula (3) and the product of formula (1), the sodium hydroxide or potassium hydroxide used is neutralized.

13. Process according to any one of the preceding claims, characterized in that the sodium hydroxide or potassium hydroxide is neutralized by silyl phosphate.
